# EUROPEAN PATENT SPECIFICATION

(11) **EP 0 729 274 B1**
(45) Date of publication and mention of the grant of the patent: **08.12.1999**
(21) Application number: 96102411.4
(22) Date of filing: 17.02.1996
(51) Int. Cl.: H04N 7/00

(54) **Method, coder and decoder for the processing of helper signals within television signals**
Verfahren, Kodierer und Dekodierer zur Verarbeitung von Hilfssignalen in Fernsehsignalen
Méthode, codage et décodage de traitement de signaux d'assistance dans des signaux de télévision

(30) Priority: 27.02.1995 EP 95400430
(43) Date of publication of application: 28.08.1996
(73) Proprietor: THOMSON multimedia, 92648 Boulogne Cédex (FR)
(72) Inventor: Boie, Werner, F-67200 Strassbourg (FR)
(74) Representative: Hartnack, Wolfgang, Dipl.-Ing.

(56) References cited:
- WO-A-90/09080
- WO-A-92/03017
- VREESWIJK F W P ET AL: "PALPLUS PROGRESS AND IMPLEMENTATION - TERRESTRIAL WIDESCREEN RIGHT ON TRACK -" 10 June 1993 , BROADCAST SESSIONS, MONTREUX, JUNE 10 - 15, 1993, NR. SYMP. 1993, PAGE(S) 772 - 777 , POSTES;TELEPHONES ET TELEGRAPHES SUISSES XP000385331 * the whole document *

## Description

The present invention relates to a method, coder and decoder for the processing of helper signals within the SECAM standard which allows a compatible 16:9 transmission in existing TV channels.

### Background

In every new television broadcast standard the image format 16:9 can be found. Concerning PALplus, the extension to the existing PAL standard, the problems in processing wide screen pictures to retain backwards compatibility with existing receivers are solved and first PALplus receivers are already on the market.

### Invention

It is the object of the invention to disclose a method for the transmission of television signals having a 16:9 format compatible to the SECAM standard. This object is reached by the inventive method disclosed in claim 1.

It is a further object of the invention to disclose a coder and a decoder which utilize the inventive method. This object is reached by the coder disclosed in claim 5 and the decoder disclosed in claim 9, respectively.

In an extension to the existing SECAM standard, in the following called SECAMplus, the change of the picture aspect ratio from 4:3 towards 16:9 has to be carried out as most essential alteration. In order to keep the additional costs for a SECAMplus decoder small, SECAMplus should have as much communality as possible with the PALplus standard.

In PALplus the letterbox format was chosen together with a transmission of a helper signal in the black band regions as described in EP-A-0445177 and EP-A-0451205. Since there is no need to transmit chrominance picture information in the black bands the helper signal is amplitude modulated onto the colour subcarrier. The same format conversion technique can be applied for SECAMplus, however, if the helper modulation is directly adopted from PALplus, strong disturbances of the black band regions by coloured large area flashes arise. This flickering is due to a missing FM subcarrier at the compatible SECAM receiver for low helper amplitudes.

According to the invention adaptively wheighted artificial subcarriers are arranged in quadrature phase to the helper signal modulated subcarrier to ensure the SECAM compatibility. This allows a compatible reproduction for conventional 4:3 receivers, while for receivers with enlarged picture-aspect ratio the helper signal is separated from the artificial subcarriers by means of a product-demodulator and is used for reconstruction of the original picture signal with the enlarged picture-aspect ratio.

In principle the inventive method consists of the processing of helper signals within television signals with enlarged picture-aspect ratio, which are compatible with conventional television standards, wherein the video signals are decomposed into helper signals and letterbox signals, in which an adaptively wheighted artificial subcarrier is added in quadrature phase to a helper signal modulated subcarrier and the composed signal is inserted into the black band region, the picture signal consisting of the letterbox and the black band signal is transmitted and at the receiving end can be decoded both with conventional 4:3 receivers and with receivers for the enlarged picture-aspect ratio, in which the helper signals are separated from the artificial subcarrier and used for reconstruction of the original picture signal with enlarged picture-aspect ratio.

Advantageous additional embodiments of the inventive method are resulting from the respective dependent claims.

In principle the inventive coder for the processing of helper signals within television signals with enlarged picture-aspect ratio comprises a format conversion unit, in which the video signal is decomposed into a letterbox signal and a helper signal, a coder for processing the letterbox signal, a modulation unit for the helper signal, which contains:
- a pre-processing unit,
- a first modulation unit, where the pre-processed helper signal is modulated onto one or more suitable subcarriers,
- an amplitude detector circuit, to which a certain helper signal modulated subcarrier is applied and which supplies a normalized detection signal,
- an adder, in which a control signal is evaluated by subtracting the normalized detection signal from 1,
- a second modulation unit, in which one or more artificial subcarriers are multiplied with the control signal to control their amplitude,
- an addition unit, where the one or more artificial subcarriers are added to the respective helper subcarriers in quadrature phase,
- a post-processing unit for half-nyquist filtering of the one or more composed signal and selection of one filtered signal in the case of more than one composed signals,
and selecting means, by which the processed helper and letterbox signals are composed.

Advantageous additional embodiments of the inventive coder are resulting from the respective dependent claims.

In principle the inventive decoder for the processing of helper signals within television signals with enlarged picture-aspect ratio comprises:
- filter units, in which the black band signal is nyquist filtered,
- a unit, which applies the composite video signal to following means, if the black porch region is reached,
- PLL circuits, to recover the FM carriers from the video signal,
- a 90 degree phase shifter,
- selecting means, which select the corresponding nyquist filtered black band signals and phase shifted FM carriers
- a product demodulater, where the nyquist filtered black band signal and the phase shifted FM carrier are multiplied,
- a lowpass filter for filtering out carrier components at multiple of the carrier frequency,
- and a post-processing unit for expansion of the helper amplitude.

### Drawings

Preferred embodiments of the invention will now be described with reference to the accompanying drawings, which show in:
- Fig. 1: a block-diagram of the processing at the transmitter side.
- Fig. 2: a block-diagram of the helper signal modulation
- Fig. 3: a block-diagram of the helper signal modulation in more detail
- Fig. 4: a block-diagram of the helper signal demodulation at the receiver side

### Preferred embodiments

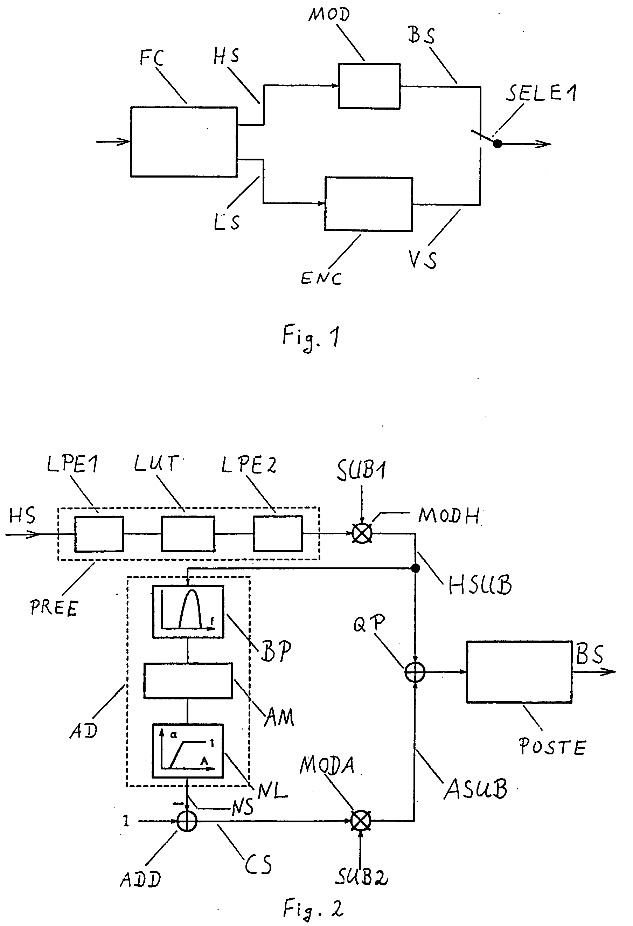

In Fig. 1 the processing at transmitter side by a coder for television signals with enlarged picture-aspect ratio, which are compatible with conventional television standards, is shown. After the format conversion, in particular from 16:9 to 4:3, in unit FC the video signal is decomposed in the case of a television signal with 576 active lines into a letterbox signal LS with 432 active lines per frame and a helper signal HS with twice 72 active lines per frame. The letterbox signal passes through a standard coder ENC which supplies at its output the composite signal while the helper signal is subjected to a processing unit MOD. The processed helper signals and the letterbox signals are then composed by selecting means SELE1.

The inventive insertion of an adaptively wheighted artificial subcarrier in the black band region is shown in Fig. 2. First a pre-processing of the helper signal HS is carried out in unit PREE. By passing through a lowpass filter LPE1 the horizontal bandwidth is reduced, a look-up-table LUT performs a companding, and a further lowpass filter LPE2 is used in order to suppress the harmonics caused by the non-linearity. Afterwards the pre-processed helper signal is modulated in a modulator MODH onto a subcarrier having a frequency, which is one fourth of the used sampling frequency. Then the amplitude of the resulting signal is determined by an amplitude detector circuit AD comprising in series a bandpass filter BP, an amplitude measuring circuit AM, and a non-linearity NL. The amplitude detector circuit ensures that in the absence of a strong helper signal an artificial subcarrier is added in quadrature phase in unit QP, thus keeping the resulting amplitude into sufficient limits. For this purpose the amplitude of the artificial subcarrier is controlled in unit MODA by a control signal CS, which is determined by subtracting the normalised detection signal NS from 1 in unit ADD. The succeeding half-nyquist filter NF realizes a half-nyquist slope at the subcarrier frequency, which has to be used, if a vestigial sideband transmission is chosen. The insertion of the artificial subcarrier in quadrature phase allows after transmission at receiver side a simple separation of the helper signal and the artificial subcarrier by means of a product-demodulator.

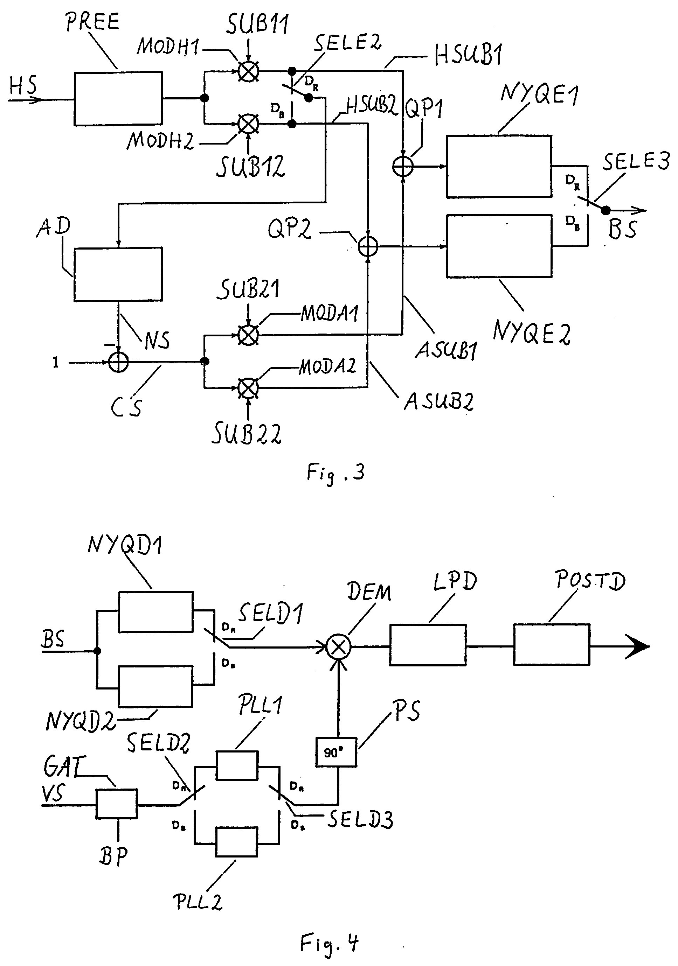

According to the two different frequencies of the colour difference components in the SECAM standard for a conventional SECAM 4:3 receiver by insertion of only one artificial subcarrier the suppression of the very bothering flickering is possible, but a slight colouring of the black band regions remains. This colouring can be suppresed by using two subcarrier frequencies for the two colour difference components, which is shown in more detail in Fig.3. After pre-processing the helper signal HS is modulated by means of modulators MODH1 and MODH2 onto two different subcarriers with frequencies f_{S}/4 and f_{S}/4-Δf , respectively, in which for digital SECAM decoding the used sampling frequency amounts to f_{S}=17.75 MHz. For the D_{R} component the high frequency subcarrier and for the D_{B} component the low frequency subcarrier is selected by selecting means SELE2 and applied to the amplitude detector AD which yields the normalised detection signal NS. Subtracted from 1 this gives the control signal CS, which controls the amplitude of two artificial subcarriers, also with frequencies f_{S}/4 and f_{S}/4-Δf by the modulators MODA1 and MODA2. The respective subcarriers and artificial subcarriers are added in quadrature phase in units QP1 and QP2 and the resulting signals are applied each to a half nyquist filter NYQE1 and NYQE2, respectively. Between the filtered signals is switched over by selecting means SELE3.

At the receiver side the helper signals can be demodulated like shown in Fig. 4. The black band signal is first half-nyquist filtered by filter units NYQD1 or NYQD2, which are identical to the used filter units at transmitter side NYQE1 and NYQE2, respectively. Between the two nyquist filtered black band signals is switched over line by line by first selecting means SELD1. Parallel to the black band processing the necessary helper carriers have to be reconstructed. For this purpose a unit GAT applies the composite video signal VS to second selecting means SELD2, if at the beginning of the TV line in the back porch region BP the FM burst, which corresponds to the quadrature phase of the carrier used in the encoder, is transmitted. The selecting means SELD2 switch over line by line between two separated PLL circuits PLL1 and PLL2, in which the two different FM carriers are recovered. After third selecting means SELD3 for line-alternating switching between the two FM carriers a 90 degree phase shifter PS becomes necessary for a synchronous amplitude demodulation of the helper signal. A product demodulator DEM, where the nyquist filtered black band signal and the phase shifted FM carrier are multiplied, yields the demodulated helper signal, which needs to be lowpass filtered in order to get rid of the carrier components at twice the carrier frequency. After filtering in unit LPD a helper post processing has to be carried out in unit POSTD which takes into account the expansion of the helper amplitude. A bandlimitation of the output signal like in the encoder is not necessary.

The use of two artificial subcarrier yields a reduction of the colouring in the black band region of conventional SECAM 4:3 receivers to neglectable values.

Another advantageous improvement of the invented method is the insertion of a constant or even adaptively amplified subcarrier amplitude where the helper signal is significantly different from zero, if the clamp or black level in the helper signal is slightly increased in order to guarantee a minimal difference between the syncronization impulse and the most negative value of the black band signal. The artificial hum corresponding to this offset can be removed by the clamp circuit at the compatible receiver.

The invention can be used e.g. in SECAMplus TV receivers and VCRs.

## Claims

1. Method for the processing of helper signals for a TV system, which is the extension to the existing SECAM standard by processing wide screen pictures having an enlarged picture-aspect ratio such as the 16:9 format while retaining backwards compatibility with existing receivers,
wherein the video signals are decomposed into helper signals (HS) and letterbox signals (LS),
the helper signals being amplitude modulated onto the colour subcarrier,
an artificial subcarrier (ASUB) is added in quadrature phase to a helper signal modulated subcarrier (HSUB),
the composed signal (BS) is inserted into the black band region,
the picture signal consisting of the letterbox signal and the black band signal is transmitted and at the receiving end can be decoded both with conventional 4:3 receivers and with receivers for the enlarged picture-aspect ratio, in the latter receivers the helper signals (HS) being separated from the artificial subcarrier and used for reconstruction of the original picture having a full vertical resolution with an enlarged picture-aspect ratio.

2. Method according to claim 1, **characterized in** that the helper signals (HS) are modulated onto two subcarriers (SUB11, SUB12) with different frequencies, in which the first frequency is nearly equal or identical to the subcarrier frequency of one colour difference component and the second frequency is nearly equal or identical to the subcarrier frequency of the other colour difference component, and that an adaptively weighted artificial subcarrier (ASUB1 or ASUB2) is added to each of the helper signal modulated subcarriers (HSUB1 or HSUB2) in quadratur phase, wherein between the two composed signals is switched over line by line of the picture signal.

3. Method according to claim 2, **characterized in** that a constant or even adaptively amplified subcarrier (ASUB1 or ASUB2) with non-neglectable amplitude is also inserted for helper signal amplitudes significantly different from zero and the black level in the helper signal is increased.

4. Method according to any of claims 1 to 3, **characterized in** that the transmitted television signals with enlarged picture-aspect ratio are compatible with the SECAM television standard and the enlarged picture-aspect ratio amounts to 16:9.

5. A coder for the processing of helper signals for a TV system, which is the extension to the existing SECAM standard by processing wide screen pictures having an enlarged picture-aspect ratio such as the 16:9 format while retaining backwards compatibility with existing receivers, related to a method according to any of claims 1 to 4, comprising a format conversion unit (FC), in which the video signal is decomposed into a letterbox signal (LS) and a helper signal (HS), a coder (ENC) for processing the letterbox signal, a modulation unit (MOD) for the helper signal, which contains:
- a pre-processing unit (PREE),
- a first modulation unit (MODH), where the pre-processed helper signal is modulated onto one or more suitable subcarriers,
- an amplitude detector circuit (AD), to which the output signal of said first modulation unit is applied and which supplies a normalized detection signal (NS),
- first combining means (ADD), in which a control signal (CS) is formed by subtracting said normalized detection signal (NS) from 1,
- a second modulation unit (MODA), in which one or more artificial subcarriers are multiplied with the control signal (CS) to control their amplitude,
- second combining means (QP), where the output signals of said second modulation unit are combined to respective helper subcarriers in quadrature phase,
- a post-processing unit (POSTE) for half-nyquist filtering the output signal of said second combining means and for the selection of one filtered signal in the case of more than one composed signals,
and selecting means (SELE1), by which the processed helper and letterbox signals are composed to form said compatible television signals.

6. A coder according to claim 5, where:
- the first modulation unit (MODH) comprises two modulation units (MODH1, MODH2) for modulation of the pre-processed helper signal onto two subcarriers corresponding to the two colour difference components in SECAM and first selecting means (SELE2) for line-alternating switching between the two modulated subcarriers,
- the second modulation unit (MODA) comprises two modulation units (MODA1, MODA2), in which two artificial subcarriers corresponding to the two helper subcarriers are multiplied with said control signal (CS),
- the second combining means (QP) comprise two addition units (QP1, QP2), where the respective helper and artificial subcarriers are added in quadrature phase,
- the post-processing unit (POSTE) comprises for each output signal of said addition units a filter unit (NYQE1, NYQE2) for nyquist-filtering and second selecting means (SELE3), which select the output signals of said filters in a line-alternating way, for inserting the correct processed and modulated signal into the black bands.

7. A coder according to claim 5 or 6, where the pre-processing unit (PREE) for the helper signal includes in series a lowpass filter (LPE1), a look-up-table (LUT) and a further lowpass filter (LPE2).

8. A coder according to any of claims 5 to 7, where the amplitude detector (AD) comprises a bandpass filter (BP), an amplitude measuring circuit (AM) and a non-linearity (NL).

9. A decoder for the processing of helper signals for a TV system, which is the extension to the existing SECAM standard by processing wide screen pictures having an enlarged picture-aspect ratio such as the 16:9 format while retaining backwards compatibility with existing receivers, related to a method according to any of claims 1 to 4, comprising:
- filter units (NYQD1, NYQD2), in which the black band signal (BS) is nyquist filtered,
- first selecting means (SELD1) for line-alternating switching between the two nyquist filtered black band signals,
- a unit (GAT), which applies the composite video signal (VS) to second selecting means (SELD2), if the black porch region (BP) is reached,
- PLL circuits (PLL1, PLL2), to recover the FM carriers from the video signal,
- second selecting means (SELD2), which connect said unit (GAT) with one of the PLL circuits (PLL1, PLL2), between which is switched over line by line,
- third selecting means (SELD3) for line-alternating switching between the two FM carriers,
- a 90 degree phase shifter (PS) downstream of (SELD3),
- a product demodulator (DEM), where the nyquist filtered black band signal and the phase shifted FM carrier are multiplied,
- a lowpass filter (LPD) connected to said product demodulator for filtering out carrier components at multiple of the carrier frequency,
- and a succeeding post-processing unit (POSTD) for expansion of the helper amplitude.

## Patentansprüche

1. Verfahren zur Verarbeitung von Helper-Signalen für ein Fernsehsystem, das die Erweiterung der vorhandenen SECAM-Norm durch Verarbeitung von Breitschirm-Bildern mit einem vergrößerten Bildseitenverhältnis, z.B. dem 16:9-Format bei Erhalten der rückwärtigen Kompatibilität mit vorhandenen Empfängern ist, wobei:
- die Videosignale in Helper-Signale (HS) und Letterbox-Signale (LS) zerlegt werden,
- die Helper-Signale auf den Farbhilfsträger amplitudenmoduliert werden,
- ein künstlicher Hilfsträger (ASUB) mit einer Phasenverschiebung von 90° zu einem mit einem Helper-Signal modulierten Hilfsträger (HSUB) addiert wird,
- das zusammengesetzte Signal (BS) in den Schwarzstreifen-Bereich eingefügt wird,
- das aus dem Letterbox-Signal und dem Schwarzstreifen-Signal bestehende Bildsignal gesendet wird und am Empfangsende sowohl von üblichen 4:3-Empfängern als auch von Empfängern für das vergrößerte Bildseitenverhältnis dekodiert werden kann, und wobei in den letzteren Empfängern die Helper-Signale (HS) von dem künstlichen Hilfsträger getrennt und für die Rekonstruktion des ursprünglichen Bildes verwendet werden, das eine volle vertikale Auflösung mit einem vergrößerten Bildseitenverhältnis hat.

2. Verfahren nach Anspruch 1, dadurch gekennzeichnet, daß die Helper-Signale (HS) auf zwei Hilfsträger (SUB11, SUB12) mit unterschiedlichen Frequenzen moduliert werden, wobei die erste Frequenz nahezu gleich oder identisch mit der Hilfsträgerfrequenz einer Farbdifferenz-Komponente und die zweite Frequenz nahezu gleich oder identisch mit der Hilfsträgerfrequenz der anderen Farbdifferenz-Komponente ist, und daß ein additiv gewichteter künstlicher Hilfsträger (ASUB1 oder ASUB2) jedem der mit dem Helper-Signal modulierten Hilfsträger (HSUB1 oder HSUB2) mit 90° Phasenverschiebung hinzugefügt wird, wobei zwischen den beiden zusammengesetzten Signalen von Zeile zu Zeile des Bildsignals umgeschaltet wird.

3. Verfahren nach Anspruch 2, dadurch gekennzeichnet, daß ein konstanter oder sogar adaptiv verstärkter Hilfsträger (ASUB1 oder ASUB2) mit nicht vernachlässigbarer Amplitude ebenfalls für Helper-Signal-Amplituden eingefügt wird, die sich beträchtlich von null unterscheiden, und daß der Schwarzpegel in dem Helper-Signal erhöht wird.

4. Verfahren nach einem der Ansprüche 1 bis 3, dadurch gekennzeichnet, daß die gesendeten Fernsehsignale mit vergrößertem Bildseitenverhältnis kompatibel mit der SECAM-Fernsehnorm sind und das vergrößerte Bildseitenverhältnis 16:9 beträgt.

5. Kodierer für die Verarbeitung von Helper-Signalen für ein Fernsehsystem, das die Erweiterung der vorhandenen SECAM-Norm durch Verarbeitung von Breitschirmbildern mit einem vergrößerten Bildseitenverhältnis, z.B. dem 16:9-Format bei Erhalten der rückwärtigen Kompatibilität mit vorhandenen Empfängern ist, gemäß dem Verfahren nach einem der Ansprüche 1 bis 4, umfassend eine Format-Umwandlungs-Einheit (FC), in der das Videosignal in ein Letterbox-signal (LS) und ein Helper-Signal (HS) zerlegt wird, einen Kodierer (ENC) zur Verarbeitung des Letterbox-Signals, eine Modulations-Einheit (MOD) für das Helper-Signal, die enthält:
- eine Vorverarbeitungs-Einheit (PREE),
- eine erste Modulations-Einheit (MODH), wo das vorverarbeitete Helper-Signal auf einen oder mehrere geeignete Hilfsträger moduliert wird,
- eine Amplituden-Detektorschaltung (AD), der das Ausgangssignal der ersten Modulations-Einheit zugeführt wird, und die ein normiertes Detektor-Signal (NS) liefert,
- erste Kombinationsmittel (ADD), in denen ein Steuersignal (CS) durch Subtraktion des normierten Detektor-Signals (NS) von 1 gebildet wird,
- eine zweite Modulations-Einheit (MODA), in der ein oder mehrere künstliche Hilfsträger mit dem Steuersignal (CS) zur Steuerung ihrer Amplitude multipliziert werden,
- zweite Kombinationsmittel (QP), wo die Ausgangssignale der zweiten Modulations-Einheit mit entsprechenden Helper-Hilfsträgern mit 90° Phasenverschiebung kombiniert werden,
- eine Nach-Verarbeitungs-Einheit (POSTE) für Halb-Nyquist-Filterung des Ausgangssignals der zweiten Kombinationsmittel und für die Auswahl eines gefilterten Signals für den Fall von mehr als einem zusammengesetzten Signal,
- Auswahlmittel (SELE1), die durch die verarbeiteten Helper- und Letterbox-Signale zusammengesetzt werden, um die kompatiblen Fernsehsignale zu bilden.

6. Kodierer nach Anspruch 5, bei dem
- die erste Modulations-Einheit (MODH) zwei Modulations-Einheiten (MODH1, MODH2) zur Modulation des vorverarbeiteten Helper-Signals auf zwei Hilfsträger, die den beiden Farbdifferenz-Komponenten bei SECAM entsprechen, und erste Auswahlmittel (SELE2) für mit der Zeile wechselndes Umschalten zwischen den beiden modulierten Hilfsträgern umfaßt,
- die zweite Modulations-Einheit (MODA) zwei Modulations-Einheiten (MODA1, MODA2) umfaßt, in denen zwei den beiden Helper-Hilfsträgern entsprechende künstliche Hilfsträger mit dem Steuersignal (CS) multipliziert werden,
- die zweiten Kombinationsmittel (QP) zwei Additions-Einheiten (QP1, QP2) umfassen, wo die entsprechenden Helper- und künstlichen Hilfsträger um 90° phasenverschoben addiert werden,
- die Nachverarbeitungs-Einheit (POSTE) für jedes Ausgangssignal der Additions-Einheiten eine Filtereinheit (NYQE1, NEYQE2) zur Nyquist-Filterung und zweite Auswahlmittel (SELE3) umfaßt, die die Ausgangssignale der Filter in zeilenwechselnder Weise zum Einfügen des richtig verarbeiteten und modulierten Signals in die Schwarzstreifen auswählen.

7. Kodierer nach Anspruch 5 oder 6, bei dem die Vorverarbeitungs-Einheit (PREE) für das Helper-Signal in Reihe ein Tiefpaßfilter (LPE1), eine Nachschlagetabelle (LUT), und ein weiteres Tiefpaßfilter (LPE2) enthält.

8. Kodierer nach einem der Ansprüche 5 bis 7, bei dem der Amplituden-Detektor (AD) ein Bandpaßfilter (PP), eine Amplituden-Meßschaltung (AM) und eine Nichtlinearität (NL) umfaßt.

9. Dekodierer für die Verarbeitung von Helper-Signalen für ein Fernsehsystem, das die Erweiterung der vorhandenen SECAM-Norm durch Verarbeitung von Breitschirmbildern mit einem vergrößerten Bildseitenverhältnis, z.B. dem 16:9-Format bei Erhalten der rückwärtigen Kompatibilität mit vorhandenen Empfängern ist, gemäß dem Verfahren nach einem der Ansprüche 1 bis 4, umfassend:
- Filter-Einheiten (NYQD1, NYQD2), in denen das Schwarzstreifen-Signal einer Nyquist-Filterung unterzogen wird,
- erste Auswahlmittel (SELD1) zur zeilenabwechselnden Umschaltung zwischen den beiden Nyquist-gefilterten Schwarzstreifen-Signalen,
- eine Einheit (GAT), die das zusammengesetzte Videosignal (VS) zweiten Auswahlmitteln (SELD2) zuführt, wenn der Schwarzschulter-Bereich (BP) erreicht wird,
- PLL-Schaltungen (PLL1, PLL2) zur Wiedergewinnung der FM-Träger aus dem Videosignal,
- zweite Auswahlmittel (SELD2), die die Einheit (GAT) mit einer der PLL-Schaltungen (PLL1, PLL2) verbinden, zwischen denen Zeile für Zeile umgeschaltet wird,
- dritte Auswahlmittel (SELD3) für zeilenabwechselnde Umschaltung zwischen den beiden FM-Trägern,
- einen 90°-Phasenschieber (PS) stromabwärts von (SELD3),
- einen Produkt-Demodulator (DEM), wo das Nyquist-gefilterte Schwarzstreifen-Signal und der phasenverschobene FM-Träger multipliziert werden,
- ein Tiefpaßfilter (LPD), das mit dem Produkt-Demodulator verbunden ist, um Trägerkomponenten mit einem Vielfachen der Trägerfrequenz herauszufiltern,
- und eine nachfolgende Nachverarbeitungs-Einheit (POSTD) zur Expansion der Helper-Amplitude.

## Revendications

1. Méthode de traitement de signaux d'assistance pour un système TV qui est le prolongement de la norme SECAM existante par traitement d'images panoramiques présentant un rapport largeur-hauteur d'image agrandi, comme le format 16:9, tout en conservant une compatibilité inverse avec les récepteurs existants,
dans laquelle les signaux vidéo sont décomposés en signaux d'assistance (HS) et en signaux boîte aux lettres (LS),
les signaux d'assistance faisant l'objet d'une modulation d'amplitude sur la sous-porteuse de chrominance,
une sous-porteuse artificielle (ASUB) est ajoutée en quadrature de phase à une sous-porteuse modulée par les signaux d'assistance (HSUB),
le signal composé (BS) est inséré dans la région de bandes noires,
le signal d'image constitué du signal boîte aux lettres et de bandes noires est émis et peut, à l'extrémité réceptrice, être décodé tant avec des récepteurs 4:3 traditionnels qu'avec des récepteurs pour le rapport largeur-hauteur d'image agrandi dans lesquels les signaux d'assistance (HS) sont séparés de la sous-porteuse artificielle et sont utilisés pour la reconstruction de l'image d'origine à résolution verticale complète et à rapport largeur-hauteur d'image agrandi.

2. Méthode selon la revendication 1, caractérisée en ce que les signaux d'assistance (HS) sont modulés sur deux sous-porteuses (SUB11, SUB12) de fréquences différentes, la première fréquence étant pratiquement égale ou identique à la fréquence de la sous-porteuse d'une composante de différence de couleur et la deuxième fréquence étant pratiquement égale ou identique à la fréquence de la sous-porteuse de l'autre composante de différence de couleur, et en ce qu'une sous-porteuse artificielle à pondération adaptative (ASUB1 ou ASUB2) est ajoutée à chacune des sous-porteuses modulées par les signaux d'assistance (HSUB1 ou HSUB2) en quadrature de phase, dans laquelle un basculement ligne par ligne du signal d'image a lieu entre les deux signaux composés.

3. Méthode selon la revendication 2, caractérisée en ce qu'une sous-porteuse constante voire à amplification adaptative (ASUB1 ou ASUB2) d'amplitude non négligeable est également insérée pour des amplitudes des signaux d'assistance sensiblement différents de zéro et le niveau de noir dans le signal d'assistance est augmenté.

4. Méthode selon l'une quelconque des revendications 1 à 3, caractérisée en ce que les signaux de télévision émis à rapport largeur-hauteur d'image agrandi sont compatibles avec la norme de télévision SECAM et le rapport largeur-hauteur d'image agrandi vaut 16:9.

5. Codeur de traitement de signaux d'assistance pour un système TV, qui est le prolongement de la norme SECAM existante par traitement d'images panoramiques présentant un rapport largeur-hauteur d'image agrandi, comme le format 16:9, tout en conservant une compatibilité inverse avec les récepteurs existants, relatif à une méthode selon l'une quelconque des revendications 1 à 4, comprenant une unité de conversion du format (FC) dans laquelle le signal vidéo est décomposé en un signal boîte aux lettres (LS) et un signal d'assistance (HS), un codeur (ENC) pour traiter le signal boîte aux lettres, une unité de modulation (MOD) pour le signal d'assistance, qui contient:
- une unité de prétraitement (PREE),
- une première unité de modulation (MODH), où le signal d'assistance prétraité est modulé sur une ou plusieurs sous-porteuses adéquates,
- un circuit de détection d'amplitude (AD) auquel est appliqué le signal de sortie de ladite première unité de modulation et qui fournit un signal de détection normalisé (NS),
- un premier moyen de combinaison (ADD), dans lequel est évalué un signal de commande (CS) par soustraction du signal de détection normalisé (NS) de 1,
- une deuxième unité de modulation (MODA), dans laquelle sont multipliées une ou plusieurs sous-porteuses artificielles par le signal de commande (CS) pour commander leur amplitude,
- un deuxième moyen de combinaison (QP), où les signaux de sortie de ladite deuxième unité de modulation sont combinés à des sous-porteuses respectives des signaux d'assistance en quadrature de phase,
- une unité de post-traitement (POSTE) pour un demi-filtrage de Nyquist du signal de sortie dudit moyen de combinaison et pour la sélection d'un signal filtré dans le cas de plusieurs signaux composés,
et un moyen de sélection (SELE1), par lequel sont composés les signaux d'assistance et boîte aux lettres traités en vue de former lesdits signaux de télévision compatibles.

6. Codeur selon la revendication 5, où:
- la première unité de modulation (MODH) comprend deux unités de modulation (MODH1, MODH2) pour la modulation du signal d'assistance prétraité sur deux sous-porteuses correspondant aux deux composantes de différence de couleur en SECAM et un premier moyen de sélection (SELE2) pour le basculement à alternance de lignes entre les deux sous-porteuses modulées,
- la deuxième unité de modulation (MODA) comprend deux unités de modulation (MODA1, MODA2), dans lesquelles sont multipliées deux sous-porteuses artificielles correspondant aux deux sous-porteuses des signaux d'assistance par ledit signal de commande (CS),
- le deuxième moyen de combinaison (QP) comprend deux unités d'addition (QP1, QP2), où sont ajoutées en quadrature de phase les sous-porteuses respectives des signaux d'assistance et artificielles,
- l'unité de post-traitement (POSTE) comprend, pour chaque signal de sortie desdites unités d'addition, une unité de filtrage (NYQE1, NYQE2) pour le filtrage de Nyquist et un deuxième moyen de sélection (SELE3) qui sélectionne les signaux de sortie desdits filtres en alternant les lignes, en vue d'insérer le signal traité et modulé correct dans les bandes noires.

7. Codeur selon la revendication 5 ou 6, où l'unité de prétraitement (PREE) pour le signal d'assistance comporte, en série, un filtre passe-bas (LPE1), une table à consulter (LUT) et un autre filtre passe-bas (LPE2).

8. Codeur selon l'une quelconque des revendications 5 à 7, où le détecteur d'amplitude (AD) comprend un filtre passe-bande (BP), un circuit de mesure d'amplitude (AM) et une non linéarité (NL).

9. Codeur de traitement de signaux d'assistance pour un système TV, qui est le prolongement de la norme SECAM existante par traitement d'images panoramiques présentant un rapport largeur-hauteur d'image agrandi, comme le format 16:9, tout en conservant une compatibilité inverse avec les récepteurs existants, relatif à une méthode selon l'une quelconque des revendications 1 à 4, comprenant:
- des unités de filtrage (NYQD1, NYQD2) dans lesquelles le signal de bandes noires (BS) fait l'objet d'un filtrage de Nyquist,
- un premier moyen de sélection (SELD1) pour le basculement à alternance de lignes entre les deux signaux de bandes noires ayant fait l'objet d'un filtrage de Nyquist,
- une unité (GAT) qui applique le signal vidéo composite (VS) à un second moyen de sélection (SELD2), si la région de palier noir (BP) est atteinte,
- des circuits PLL (PLL1, PLL2) pour récupérer les porteuses FM du signal vidéo,
- un deuxième moyen de sélection (SELD2) qui connecte ladite unité (GAT) à l'un des circuits PLL (PLL1, PLL2), entre lesquels il bascule ligne par ligne,
- un troisième moyen de sélection (SELD3) pour le basculement à alternance de lignes entre les deux porteuses FM,
- un déphaseur de 90 degrés (PS) en aval de (SELD23),
- un démodulateur-produit (DEM), où sont multipliés le signal de bandes noires ayant fait l'objet d'un filtrage de Nyquist et la porteuse FM déphasée,
- un filtre passe-bas (LDP) connecté au démodulateur-produit pour filtrer des composantes de la porteuse à un multiple de la fréquence de la porteuse,
- et une unité de post-traitement (POSTD) successive pour la dilatation de l'amplitude du signal d'assistance.
